# EUROPEAN PATENT APPLICATION

(11) **EP 1 113 600 A2**
(43) Date of publication of application: **04.07.2001**
(21) Application number: 00123308.9
(22) Date of filing: 26.10.2000
(51) Int. Cl.: H04H 1/00

(54) **Device for broadcasting a programme with one or more receiving terminal identifiers which are transmitted with the programme for identifying a receiving terminal and receiving device for receiving this programme**

(30) Priority: 28.10.1999 JP 30777099
(71) Applicant: MATSUSHITA ELECTRIC INDUSTRIAL CO., LTD., Kadoma-shi, Osaka 571-8501 (JP)
(72) Inventor: Kataoka, Mitsuteru, Katano-shi, Osaka 576-0034 (JP); Kato, Fumiyuki, Yokohama-shi, Kanagawa 226-0028 (JP)
(74) Representative: Schwabe - Sandmair - Marx

(57) **Abstract**

A broadcasting device of the present invention is a broadcasting device for broadcasting a program with one or more receiving terminal identifiers attached thereto for identifying a receiving terminal.

## Description

### 1. FIELD OF THE INVENTION:

The present invention relates to a broadcasting device and a receiving device, particularly to a broadcasting device and a receiving device used in a system where information to be transmitted from the broadcasting device is stored in the receiving device.

### 2. DESCRIPTION OF THE RELATED ART:

In a system where information to be transmitted from a broadcasting device is stored in a receiving device, the information to be stored is selected on the receiving device side. For example, in data broadcasting, a predetermined keyword is set on the receiving device side, and based on the set keyword, the receiving device selects a part of the information transmitted from the transmitting device and stores this part in a storage management section.

It is desired to implement a system in which it is possible to transmit information, such as direct mail, from a broadcasting device to the receivers of members based on a member list.

However, with the conventional system described above, the broadcasting device cannot transmit the data to particular receivers because the data to be stored therein is selected on the receiving device side.

When information such as direct mail is transmitted from a broadcasting device to receiving devices, it is necessary to ensure the confidentiality of information, such as a member list.

### SUMMARY OF THE INVENTION

According to one aspect of this invention, there is provided a broadcasting device for broadcasting a program with one or more receiving terminal identifiers attached thereto for identifying a receiving terminal.

In one embodiment of the invention, the receiving terminal identifiers have been converted into a predetermined form.

In one embodiment of the invention, the predetermined form is provided by using a one-way function.

In one embodiment of the invention, the broadcasting device broadcasts a program with one or more group identifiers, which identify a plurality of the receiving terminals as a group, attached thereto.

In one embodiment of the invention, each of the receiving terminal identifiers is a telephone number.

In one embodiment of the invention, each of the group identifiers is the whole or part of a zip code.

In one embodiment of the invention, each of the group identifiers is an area code or an area code plus a local area code of the telephone number.

According to another aspect of this invention, there is provided a receiving device, comprising: a receiving section for receiving a program with one or more receiving terminal identifiers attached thereto; an identifier storage section for storing an associated receiving terminal identifier; a storage management section for storing and managing the program; a separating section for separating the program with the receiving terminal identifiers attached thereto which has been received by the receiving section into the receiving terminal identifiers and the program; a determination section for determining whether the one or more receiving terminal identifiers separated by the separating section include the associated receiving terminal identifier stored in the identifier storage section; and a storage control section for storing the program separated by the separating section in the storage management section when the determination section determines that one of the one or more receiving terminal identifiers include the associated receiving terminal identifier.

In one embodiment of the invention, the receiving terminal identifiers have been converted into a predetermined form.

In one embodiment of the invention, the predetermined form is provided by using a one-way function.

In one embodiment of the invention, the receiving section receives a program with one or more group identifiers attached thereto; the identifier storage section stores an associated group Identifier; the separating section separates the program with the one or more group identifiers attached thereto which has been received by the receiving section into the group identifiers and the program; and the determination section determines whether the one or more group identifiers separated by the separating section include the associated group identifier stored in the identifier storage section.

In one embodiment of the invention, each of the receiving terminal identifiers is a telephone number.

In one embodiment of the invention, of the group identifiers is the whole or part of a zip code.

In one embodiment of the invention, each of the group identifiers is an area code or an area code plus a local area code of a telephone number.

Thus, the invention described herein makes possible the advantages of (1) providing a broadcasting device and a receiving device in which it is possible to transmit the information from the broadcasting device to a particular receiving device, and (2) providing a broadcasting device and a receiving device in which it is possible to ensure confidentiality of information transmitted from the broadcasting device to the receiving device.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram of a transmitting device according to Embodiment 1 of the present invention.

Figure **2A** is a diagram illustrating a program according to Embodiment 1 before attaching receiving terminal identifiers thereto.

Figure **2B** is a diagram illustrating the program of Figure **2A** after attaching the receiving terminal identifiers thereto.

Figure **3** is a block diagram of the receiving device according to Embodiment 1.

Figure **4** is a flow chart illustrating the operation of the receiving device according to Embodiment 1.

Figure **5** is a block diagram of a transmitting device according to Embodiment 2 of the present invention.

Figure **6** is a diagram illustrating a program according to Embodiment 2 after attaching receiving terminal identifiers thereto.

Figure **7** is a block diagram of a receiving device according to Embodiment 2.

Figure **8** is a flow chart illustrating the operation of the receiving device according to Embodiment 2.

Figure **9** is a block diagram of a transmitting device according to Embodiment 3 of the present invention.

Figure **10** is a diagram illustrating a program according to Embodiment 3 after attaching group identifiers thereto.

Figure **11** is a block diagram of a receiving device according to Embodiment 3.

Figure **12** is a flow chart illustrating the operation of the receiving device according to Embodiment 3.

Figure **13A** is a diagram illustrating a storage medium which stores a computer program for controlling the operation of the receiving devices according to Embodiments 1-3.

Figure **13B** is a diagram illustrating the storage medium and the receiving device according to Embodiments 1-3.

### DESCRIPTION OF THE PREFERRED EMBODIMENTS

Embodiments of the present invention will now be described with reference to the Figures.

### (Embodiment 1)

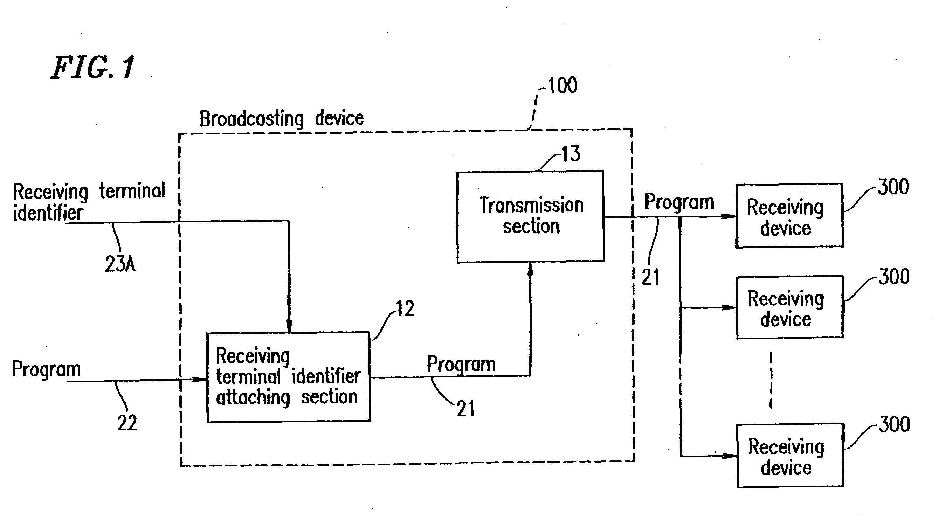

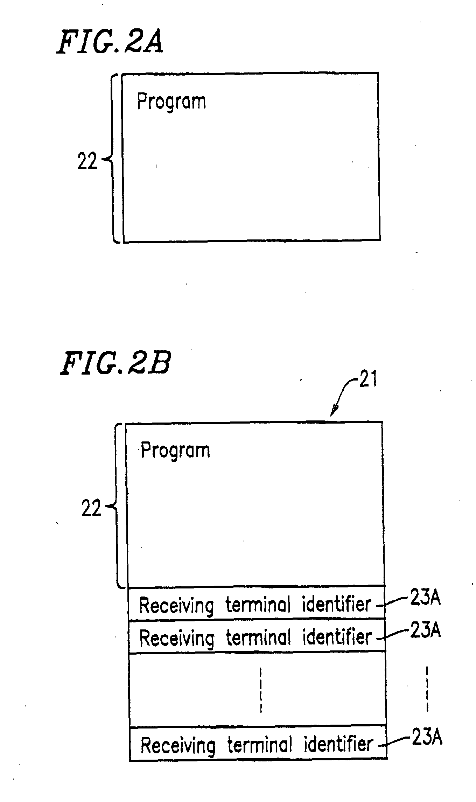

Figure **1** is a block diagram of a transmitting device **100** according to Embodiment 1 of the present invention. Figure **2A** is a diagram illustrating a program (e.g., a broadcast program such as a TV program) according to Embodiment 1 before attaching receiving terminal identifiers thereto. Figure **2B** is a diagram illustrating the program after attaching the receiving terminal identifiers thereto.

With reference to Figure **1**, the transmitting device **100** includes a receiving terminal identifier attaching section **12** and a transmission section **13**.

With reference to Figures **1**, **2A,** and **2B,** the receiving terminal identifier attaching section **12** receives a program **22** shown in Figure **2A**. When the receiving terminal identifier attaching section **12** receives one or more receiving terminal identifiers **23A** which identify receiving terminals **300**, the receiving terminal identifier attaching section **12** produces and outputs a program **21**, including a program **22** with one or more receiving terminal identifiers **23A** attached thereto, as shown in Figure **2B.**

The receiving terminal identifiers **23A** may be, for example, telephone numbers of the owners of the receiving terminals **300**. The receiving terminal identifiers **23A** may alternatively be serial numbers of the receiving terminals **300**, or other types of identifiers of the owners (e.g., social security numbers).

When no receiving terminal identifier **23A** is received, the receiving terminal identifier attaching section **12** does not attach a receiving terminal identifier **23A** to the program **22**, and outputs the program **22** as the program **21**.

The transmission section **13** transmits the program **21** which has been output from the receiving terminal identifier attaching section **12** to a plurality of the receiving devices **300**.

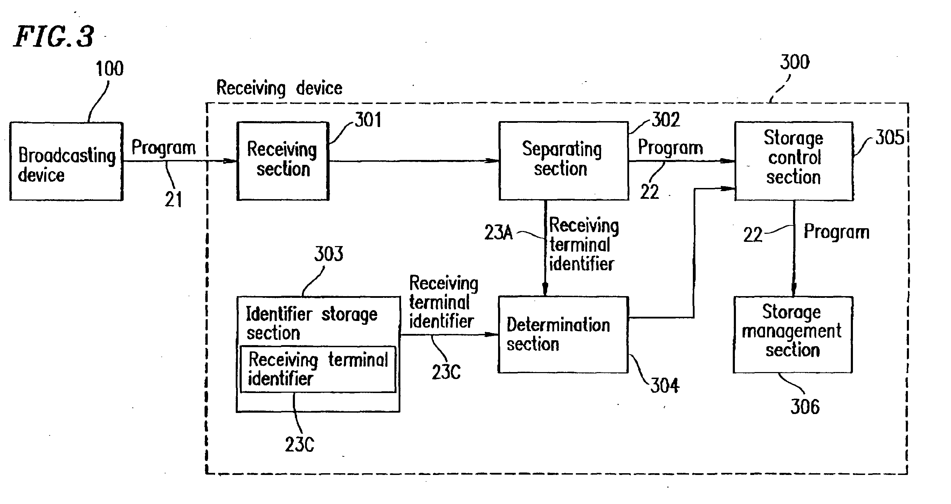

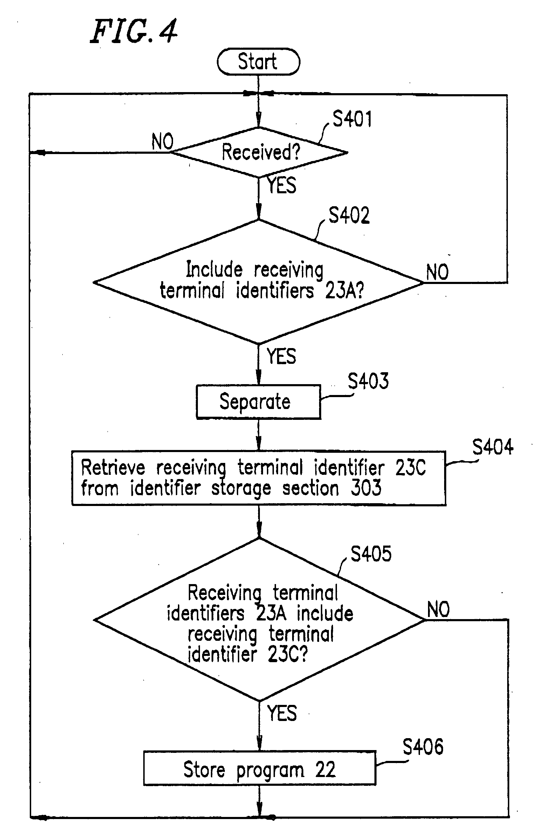

Figure **3** is a block diagram of a receiving device **300** according to Embodiment 1. Figure **4** is a flow chart illustrating the operation of a receiving device **300** according to Embodiment 1.

With reference to Figure **3**, the receiving device **300** includes a receiving section **301**, a separating section **302,** an identifier storage section **303,** a determination section **304,** a storage control section **305**, and a storage management section **306.** The identifier storage section **303** stores a predetermined receiving terminal identifier **23C.**

With reference to Figures **3** and **4**, the receiving section **301** determines whether the program **21** has been received from the broadcasting device **100** (S401).

When it is determined that the program **21** has been received from the broadcasting device **100** (YES at S401), the receiving section **301** determines whether the program **21** includes one or more receiving terminal identifiers **23A** (S402).

When it is determined that the program **21** includes the receiving terminal identifiers **23A** (YES at S402), the separating section **302** separates the program **21** which has been received by the receiving section **301** into the receiving terminal identifiers **23A** and the program **22** (S403).

The determination section **304** retrieves the receiving terminal identifier **23C** stored in the identifier storage section **303** (S404), and determines whether the receiving terminal identifiers **23A** include the receiving terminal identifier **23C** which has been retrieved from the identifier storage section **303** (S405).

When the determination section **304** determines that the receiving terminal identifiers **23A** include the receiving terminal identifier **23C** (YES at S405), the storage control section **305** stores the program **22** in the storage management section **306** (S406).

When the determination section **304** determines that the receiving terminal identifiers **23A** do not include the receiving terminal identifier **23C** (NO at S405), when the storage control section **305** has stored the program **22** in the storage management section **306** (S406), when it is determined that the program **21** includes no receiving terminal identifier **23A** (NO at S402), or when it is determined that the program **21** is not received from the broadcasting device **100** (NO at S401), the process returns to S401.

In accordance with Embodiment 1 as described above, it is possible to provide a broadcasting device **100** and a receiving device **300** in which it is possible to transmit a program **21** from the broadcasting device **100** to particular receiving device(s) **300**.

Although the identifier storage section **303** stores a single receiving terminal identifier **23C** in the example described above, the present invention is not limited to this example. Alternatively, a plurality of the receiving terminal identifiers **23C** may be used.

### (Embodiment 2)

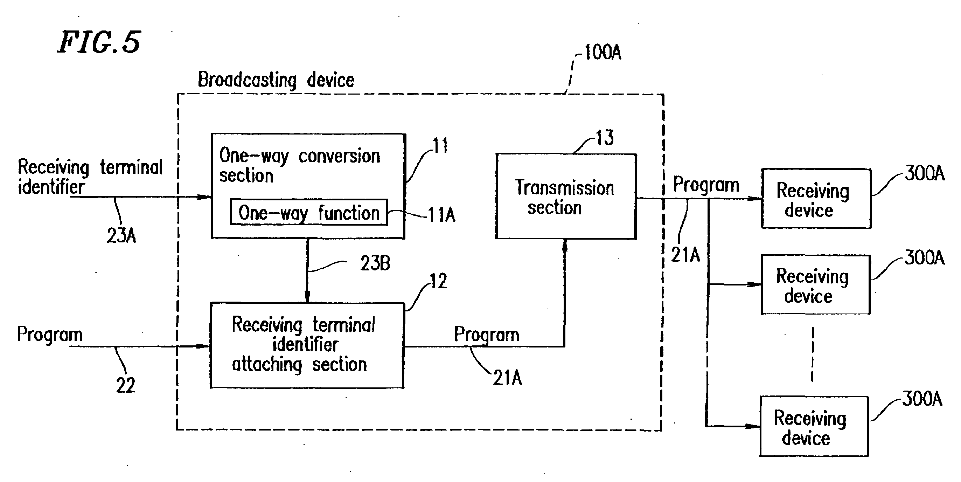

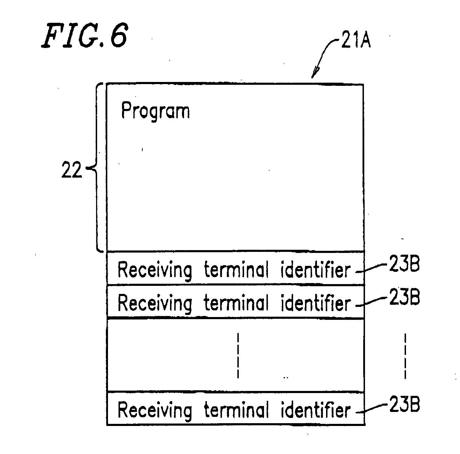

Figure **5** is a block diagram of a broadcasting device **100A** according to Embodiment 2 of the present invention. Figure **6** is a diagram illustrating a program **21A** according to Embodiment 2 after attaching receiving terminal identifiers thereto. In Embodiment 2, those elements which are also shown in Embodiment 1 are denoted by the same references and will not be further described below.

With reference to Figures **5** and **6,** the broadcasting device **100A** further includes a one-way conversion section **11**. The one-way conversion section **11** has a one-way function **11A.**

The one-way function as used herein refers to a function for which there is no inverse function, and which gives different outputs for different inputs. An example of such is DES (Data Encryption Standard) which is used for password management in UNIX systems.

The one-way conversion section **11** receives the receiving terminal identifiers **23A** which identify the receiving terminals **300A**. The one-way conversion section **11** converts the receiving terminal identifiers **23A** into a predetermined form by using the one-way function **11A.** The one-way conversion section **11** outputs receiving terminal identifiers **23B** which have each been converted into the predetermined form.

The receiving terminal identifier attaching section **12** receives the program **22**. In the case when the one-way conversion section **11** receives the receiving terminal identifiers **23A,** the receiving terminal identifier attaching section **12** produces and outputs a program **21A** including the program **22** with the receiving terminal identifiers **23B** attached thereto which have been output from the one-way conversion section **11**.

When the one-way conversion section **11** does not receive a receiving terminal identifier **23A,** no receiving terminal identifiers **23B** is output from the one-way conversion section **11** and the receiving terminal identifier attaching section **12** does not attach a receiving terminal identifier **23B** to the program **22** and outputs the program **22** as the program **21A.**

The transmission section **13** transmits the program **21A** to a plurality of receiving devices **300A.**

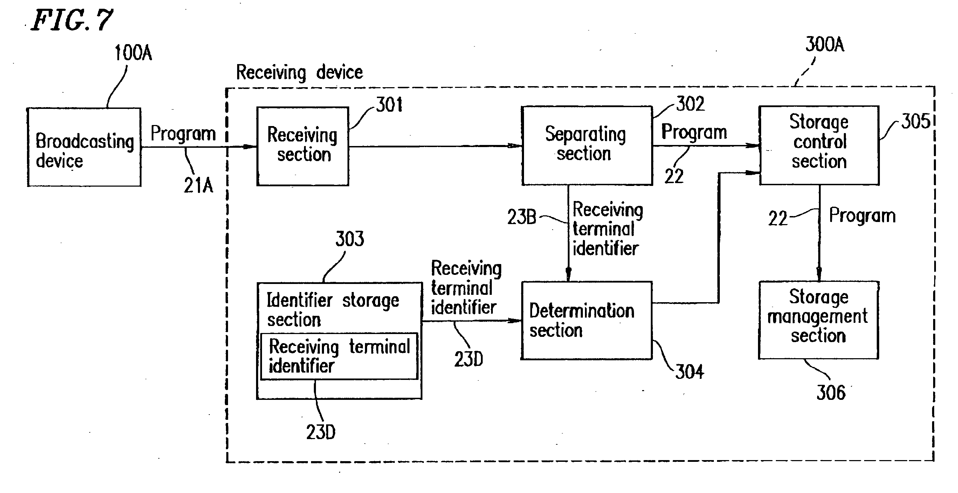

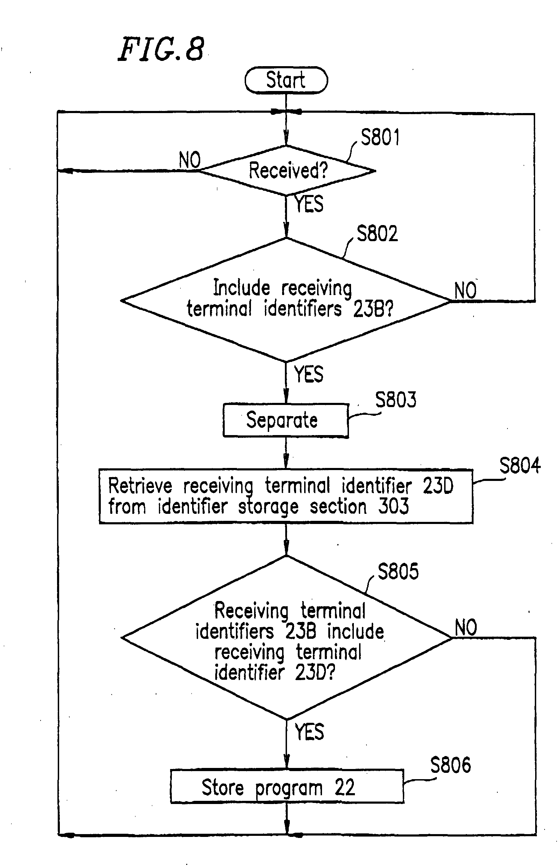

Figure **7** is a block diagram of a receiving device **300A** according to Embodiment 2. Figure **8** is a flow chart illustrating the operation of a receiving device **300A** according to Embodiment 2.

With reference to Figure **7**, the receiving device **300A** includes a receiving section **301**, a separating section **302**, an identifier storage section **303**, a determination section **304**, a storage control section **305**, and a storage management section **306**.

The identifier storage section **303** stores a predetermined receiving terminal identifier **23D**. The receiving terminal identifier **23D** has been previously converted into the predetermined form by using the one-way function **11A.**

With reference to Figures **7** and **8**, the receiving section **301** determines whether the program **21A** has been received from the broadcasting device **100A** (S801).

When it is determined that the program **21A** has been received from the broadcasting device **100A** (YES at S801), the receiving section **301** determines whether the program **21A** includes one or more receiving terminal identifiers **23B** (S802).

When it is determined that the program **21A** includes the receiving terminal identifiers **23B** (YES at S802), the separating section **302** separates the program **21A** which has been received by the receiving section **301** into the receiving terminal identifiers **23B** and the program **22** (S803).

The determination section **304** retrieves the receiving terminal identifier **23D** stored in the identifier storage section **303** (S804), and determines whether the receiving terminal identifiers **23B** include the receiving terminal identifier **23D** which has been retrieved from the identifier storage section **303** (S805).

When the determination section **304** determines that the receiving terminal identifiers **23B** include the receiving terminal identifier **23D** (YES at S805), the storage control section **305** stores the program **22** in the storage management section **306** (S806).

When the determination section **304** determines that the receiving terminal identifiers **23B** do not include the receiving terminal identifier **23D** (NO at S805), when the storage control section **305** has stored the program **22** in the storage management section **306** (S806), when it is determined that the program **21A** includes no receiving terminal identifier **23B** (NO at S802), or when it is determined that the program **21A** is not received from the broadcasting device **100A** (NO at S801), the process returns to S801.

In accordance with Embodiment 2 as described above, the receiving terminal identifiers **23B,** which are converted into the predetermined form by using the one-way function **11A,** are transmitted, so that it is possible to ensure the confidentiality of the receiving terminal identifiers which are transmitted from the broadcasting device **100A** to the receiving devices **300A.**

Although the receiving terminal identifier **23D** stored in the identifier storage section **303** has been previously converted into the predetermined form by using the one-way function in the example described in Embodiment 2, the present invention is not limited to this example. If the receiving device is provided with a decryption section for decrypting the receiving terminal identifiers **23B** which have been converted into the predetermined form by using the one-way function **11A,** the receiving terminal identifier **23D** does not need to be converted into the predetermined form.

### (Embodiment 3)

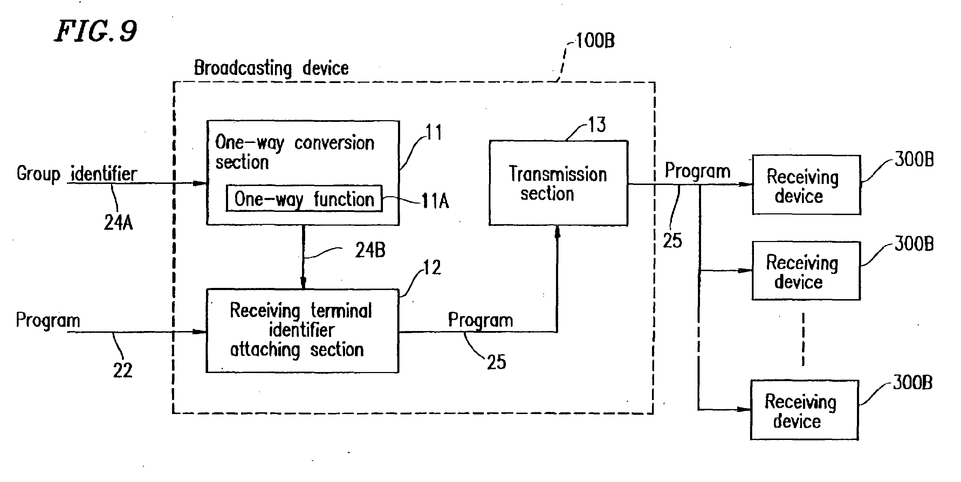

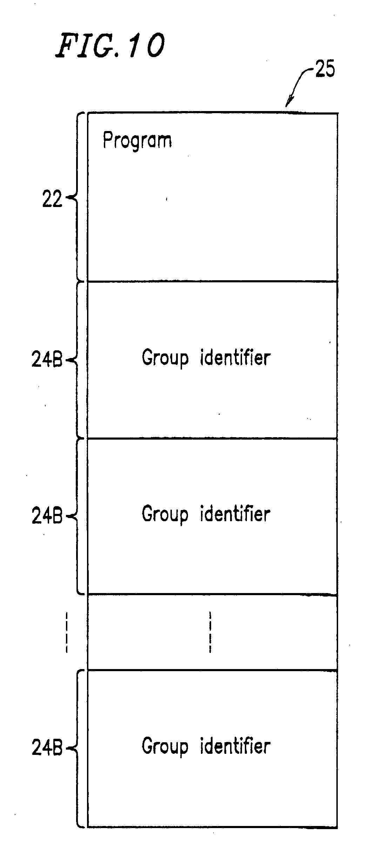

Figure **9** is a block diagram of a transmitting device **100B** according to Embodiment 3 of the present invention. Figure **10** is a diagram illustrating a program according to Embodiment 3 after attaching group identifiers thereto. In Embodiment 3, those elements which are also shown in Embodiment 1 and Embodiment 2 are denoted by the same references and will not be further described below.

In Embodiment 3, group identifiers, which identify a plurality of receiving terminals as a group, are used in place of the receiving terminal identifiers described above in Embodiment 1 and Embodiment 2.

With reference to Figure **9**, the transmitting device **100B,** similar to the transmitting device **100A** of Embodiment 2, includes a one-way conversion section **11**, a receiving terminal identifier attaching section **12**, and a transmission section **13**. The one-way conversion section **11** has a one-way function **11A**.

The one-way conversion section **11** receives group identifiers **24A,** which identify a plurality of receiving terminals **300B** as a group. A group identifier **24A** may be the whole or part of a zip code. For example, a group identifier **24A** may be "573" which is a part of a zip code "573-1105". A group identifier **24A** may be an area code or an area code plus a local area code of a telephone number. For example, a group identifier **24A** may be an area code "03" or an area code plus a local area code "03 (6949)" of a telephone number "03 (6949) 5831".

The one-way conversion section **11** converts the group identifiers **24A** into a predetermined form using the one-way function **11A.** The one-way conversion section **11** outputs receiving terminal identifiers **24B** which have been converted into the predetermined form.

With reference to Figures **9** and **10**, the receiving terminal identifier attaching section **12** receives the program **22**. In the case when the one-way conversion section **11** receives the group identifiers **24A**, the receiving terminal identifier attaching section **12** produces and outputs a program **25** including a program **22** with the group identifiers **24B** attached thereto which has been output from the one-way conversion section **11**.

When the one-way conversion section **11** does not receive a group identifier **24A,** no group identifier **24B** is output from the one-way conversion section **11** and receiving terminal identifier attaching section **12** does not attach a group identifier **24B** to the program **22** and outputs the program **22** as the program **25.**

The transmission section **13** transmits the program **25** to a plurality of the receiving devices **300B.**

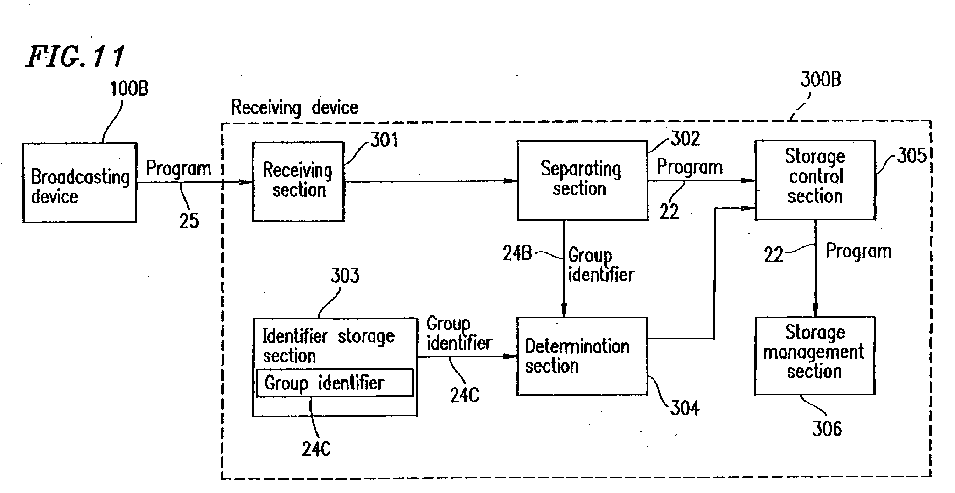

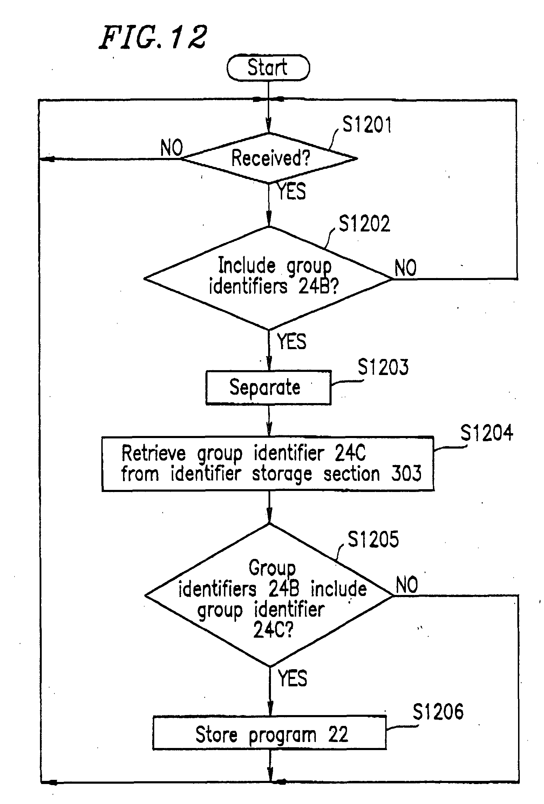

Figure **11** is a block diagram of the receiving device **300B** according to Embodiment 3. Figure **12** is a flow chart illustrating the operation of the receiving device **300B** according to Embodiment 3. In Embodiment 3, those elements which are also shown in Embodiment 1 and Embodiment 2 are denoted by the same references and will not be further described below.

With reference to Figure **11**, the receiving device **300B,** similar to the receiving device **300** of Embodiment 1, includes a receiving section **301,** a separating section **302,** an identifier storage section **303,** a determination section **304**, a storage control section **305**, and a storage management section **306**. The identifier storage section **303** stores a predetermined group identifier **24C**. The group identifier **24C** has been previously converted into the predetermined form using the one-way function.

With reference to Figures **11** and **12,** the receiving section **301** determines whether the program **25** has been received from the broadcasting section **100B** (S1201).

When it is determined that the program **25** has been received from the broadcasting section **100B** (YES at S1201), the receiving section **301** determines whether the program **25** includes one or more group identifiers **24B** (S1202).

When it is determined that the program **25** includes the group identifiers **24B** (YES at S1202), the separating section **302** separates the program **25** which has been received by the receiving section **301** into the group identifiers **24B** and the program **22** (S1203).

The determination section **304** retrieves the group identifier **24C** stored in the identifier storage section **303** (S1204) and determines whether the group identifiers **24B** include the receiving terminal identifier **24C** which has been retrieved from the identifier storage section **303** (S1205).

When the determination section **304** determines that the group identifiers **24B** include the group identifier **24C** (YES at S1205), the storage control section **305** stores the program **22** in the storage management section **306** (S1206).

When the determination section **304** determines that the group identifiers **24B** do not include the group identifier **24C** (NO at S1205), when the storage control section 305 has stored the program **22** in the storage management section **306** (S1206), when it is determined that the program **25** includes no group identifier **24B** (NO at S1202), or when it is determined that the program **25** is not received from the broadcasting device **100B** (NO at S1201), the process returns to S1201.

In accordance with Embodiment 3 as described above, the program **25** can be transmitted from the broadcasting device **100B** to a particular group of the receivers **300B.**

Although the group identifiers **24B** which have been converted into the predetermined form by using the one-way function **11A** are transmitted in the example described in Embodiment 3, the present invention is not limited to this example. Similar effects may be achieved by transmitting the group identifiers **24A** which are not converted into the predetermined form while the group identifier **24C** which has not been converted into the predetermined form is stored in the identifier storage section **303**.

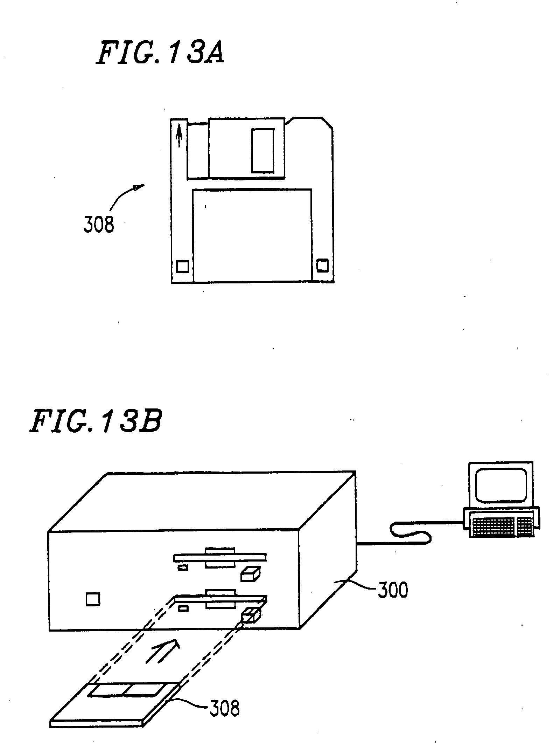

Figure **13A** is a diagram illustrating a storage medium which stores a computer program for controlling the operation of the receiving devices according to an embodiment of the present invention. Figure **13B** is a diagram illustrating the storage medium and the receiving device according to an embodiment of the present invention.

The receiving devices **300, 300A,** and **300B**, which are described above in Embodiments 1-3, include a control section (not shown), and the control section controls the operation of the receiving section **301**, the separating section **302**, the identifier storage section **303**, the determination section **304**, the storage control section **305**, and the storage management section **306** based on a predetermined computer program.

The predetermined computer program may be recorded on, for example, the recording medium **308,** and may be supplied to the receiving device **300** by the recording medium **308.** Alternatively, the predetermined computer program may be previously stored in the memory (not shown) provided in the control section.

The predetermined computer program may alternatively be downloaded through a network, and supplied to the receiving device **300.**

In accordance with the present invention as described above, a broadcasting device and a receiving device can be provided with which it is possible to transmit the information from the broadcasting device to a particular receiving device.

Furthermore, in accordance with the present invention, the broadcasting device and the receiving device can be provided with which it is possible to ensure confidentiality of the information to be transmitted when the information is transmitted from the broadcasting device to the receiving device.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A broadcasting device for broadcasting a program with one or more receiving terminal identifiers attached thereto for identifying a receiving terminal.

2. A broadcasting device according to claim 1, wherein the receiving terminal identifiers have been converted into a predetermined form.

3. A broadcasting device according to claim 2, wherein the predetermined form is provided by using a one-way function .

4. A broadcasting device according to claim 1, wherein the broadcasting device broadcasts a program with one or more group identifiers, which identify a plurality of the receiving terminals as a group, attached thereto.

5. A broadcasting device according to claim 1, wherein each of the receiving terminal identifiers is a telephone number.

6. A broadcasting device according to claim 4, wherein each of the group identifiers is the whole or part of a zip code.

7. A broadcasting device according to claim 4, wherein each of the group identifiers is an area code or an area code plus a local area code of the telephone number.

8. A receiving device, comprising:
a receiving section for receiving a program with one or more receiving terminal identifiers attached thereto;
an identifier storage section for storing an associated receiving terminal identifier;
a storage management section for storing and managing the program;
a separating section for separating the program with the receiving terminal identifiers attached thereto which has been received by the receiving section into the receiving terminal identifiers and the program;
a determination section for determining whether the one or more receiving terminal identifiers separated by the separating section include the associated receiving terminal identifier stored in the identifier storage section; and
a storage control section for storing the program separated by the separating section in the storage management section when the determination section determines that one of the one or more receiving terminal identifiers include the associated receiving terminal identifier .

9. A receiving device according to claim 8, wherein the receiving terminal identifiers have been converted into a predetermined form.

10. A receiving device according to claim 9, wherein the predetermined form is provided by using a one-way function.

11. A receiving device according to the claim 8, wherein:
the receiving section receives a program with one or more group identifiers attached thereto;
the identifier storage section stores an associated group identifier;
the separating section separates the program with the one or more group identifiers attached thereto which has been received by the receiving section into the group identifiers and the program; and
the determination section determines whether the one or more group identifiers separated by the separating section include the associated group identifier stored in the identifier storage section.

12. A receiving device according to claim 8, wherein each of the receiving terminal identifiers is a telephone number.

13. A receiving device according to claim 11, wherein each of the group identifiers is the whole or part of a zip code.

14. A receiving device according to claim 11, wherein each of the group identifiers is an area code or an area code plus a local area code of a telephone number.
